# EUROPEAN PATENT SPECIFICATION

(11) **EP 2 129 571 B1**
(45) Date of publication and mention of the grant of the patent: **02.06.2010**
(21) Application number: 08701420.5
(22) Date of filing: 11.01.2008
(51) Int. Cl.: B62K 21/12

(54) **HANDLEBAR OF VARIABLE CROSS-SECTION**
LENKER MIT VARIABLEM QUERSCHNITT
GUIDON À SECTION TRANSVERSALE VARIABLE

(30) Priority: 31.01.2007 IT MI20070027 U
(43) Date of publication of application: 09.12.2009
(73) Proprietor: DOMINO S.p.A., 23896 Sirtori, Frazione Bevera (Lecco) (IT)
(72) Inventor: GREPPI, Bruno, I-23884 Castello Brianza (Lecco) (IT)
(74) Representative: Ripamonti, Enrico
(86) International application number: PCT/EP2008/050275
(87) International publication number: WO 2008/092722

(56) References cited:
- CH-A- 257 273
- FR-A- 906 024
- US-A- 2 178 935
- US-A1- 2006 130 307

## Description

The present invention relates to a vehicle handlebar, in particular for motorcycles.

It is known in the art to provide motorcycle handlebars using a tubular body of polygonal cross-section, to increase the component mechanical strength. FR 906024 (see Fig.2) describes a handlebar comprising a tubular body of variable cross-section, said tubular body having a portion of polygonal cross-section, according to the preamble of the main claim.

However these handlebars have to be provided with additional components, such as cylindrical sleeves to be drawn over the handlebar for mounting the handgrips or for clamping the handlebar to the steering column via suitable cylindrical engagement clamps, so increasing the component complexity and cost.

The general object of the present invention is to obviate the aforesaid drawbacks by providing a handlebar of simple and economical structure which provides high mechanical strength.

This object is attained according to the invention by a vehicle handlebar comprising a tubular body of variable cross-section, the tubular body comprising a central segment intended to be clamped to the vehicle steering column, a pair of end segments intended to form opposing portions for gripping by the vehicle user, and a pair of intermediate segments, inclined to the central segment, each of which connects an end segment to the central segment on opposite sides, the tubular body having a generally polygonal cross-section at the intermediate segments, in the central segment a pair of portions of substantially circular cross-section being present to engage the vehicle steering column via clamping means, a portion of generally polygonal cross-section being interposed between said two portions of substantially circular cross-section.

The innovative principles of the present invention and its advantages compared to the known art will be more apparent from the ensuing description, with the aid of the accompanying drawings, of a possible embodiment applying these principles. In the drawings:
Figure 1 is a perspective view of a first embodiment of a handlebar according to the present invention,
Figure 2 is an elevation of the handlebar of the previous figure,
Figure 3 is a section through the handlebar of the previous figures taken on the plane III-III of Figure 2,
Figure 4 is a section through the handlebar of the previous figures taken on the plane IV-IV of Figure 2,
Figure 5 is a section through the handlebar of the previous figures taken on the plane V-V of Figure 2,
Figure 6 is a perspective view of an alternative embodiment of a handlebar formed in accordance with the present invention,
Figure 7 is a perspective view of an alternative embodiment of a handlebar formed in accordance with the present invention.

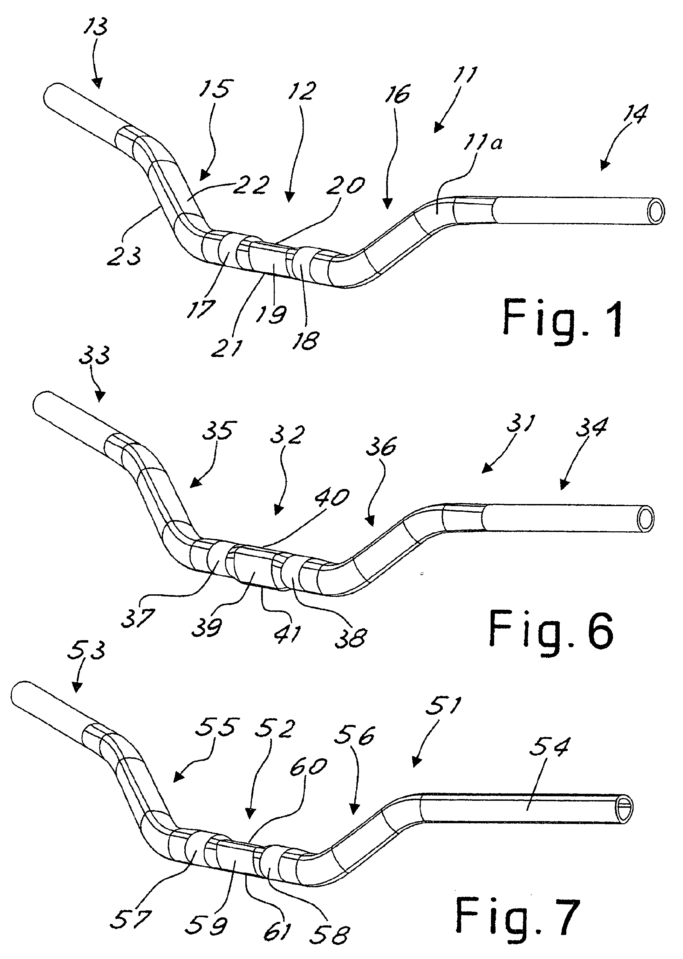

With reference to the figures, Figure 1 shows a vehicle handlebar 11 according to the present invention, for example a motorcycle handlebar.

The handlebar 11 comprises a tubular body 11a provided with a central segment 12 intended to be clamped to the vehicle steering column, a pair of end segments 13, 14 intended to form opposing portions for gripping by the vehicle user, and a pair of intermediate segments 15 and 16 connecting the end segments 13, 14 to the central segment. Specifically, the intermediate segment 15 connects the right end segment 13 to the central segment 12, while the intermediate segment 16 connects the left end segment 14 on the opposite side of the central segment. In known manner, the intermediate segments 15, 16 are made oblique to the central segment 12, the orientation of which is virtually horizontal when mounted on the vehicle with the intermediate segments generally facing upwards.

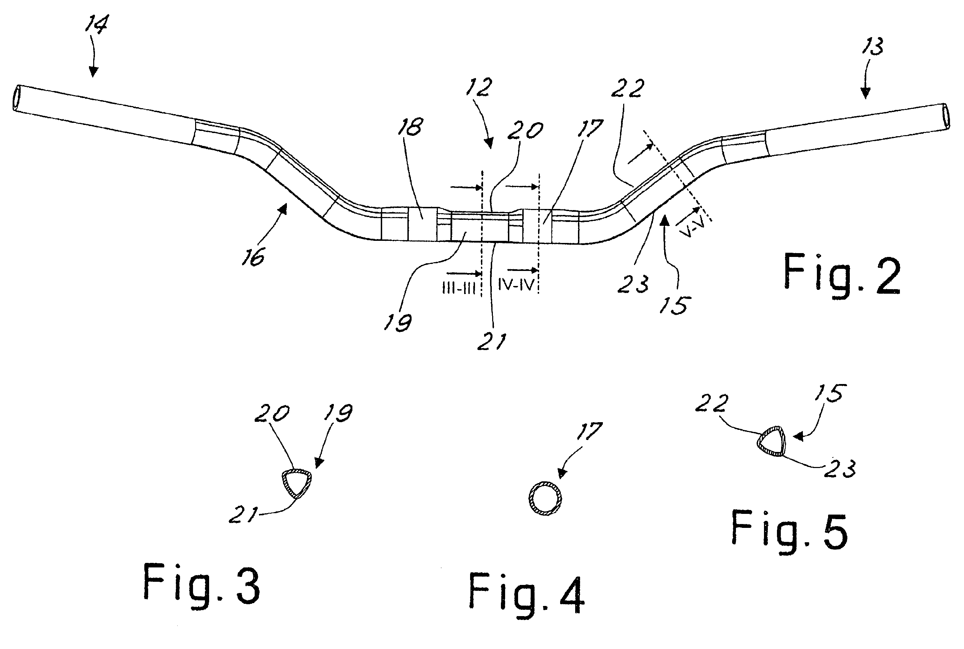

The tubular body 11 a is of generally polygonal cross-section at the intermediate segments 15, 16. In a preferred embodiment of the invention, the cross-section is generally triangular, as best shown in Figure 5 which shows the cross-section V-V at the height of the intermediate segment 15. The profile of the cross-section between two adjacent angles can be advantageously slightly convex, as shown in the figure.

In the central segment 12 a pair of portions of substantially circular cross-section 17, 18 are present to engage means for its clamping to the vehicle steering column. When in use, each portion 17, 18 can be clamped in a respective clamp (not shown) comprising a pair of jaws of semicircular profile to fix the handlebar to the motorcycle steering column. The clamp is formed in accordance with known methods of the art and is not further described herein. In the embodiment shown in the figure, the portions 17 and 18 are of perfectly circular cross-section. However it should be noted that these portions could also be provided with a plurality of longitudinal slots (or grooves) to engage corresponding ribs provided on the inner profile of the jaws to clamp them to the steering column (so-called "narrow-grooved" machined profiles). This expedient reduces the risk of handlebar rolling or slippage.

Between the two circular cross-section portions 17, 18 a portion 19 of generally polygonal cross-section is interposed, advantageously with a generally triangular cross-section. Figure 3 shows the cross-section of the tubular body at the portion 19, virtually coinciding in shape and size with the cross-section of the intermediate segment 17 (Figure 5).

In the embodiment of Figures 1-5, the polygonal cross-section at the portion 19 can be inscribed in the circular profile defined by the tube cross-section at the portions 17 and 18 (see Figures 3 and 4).

Advantageously the segment 19 between the two circular cross-section portions 17, 18 presents an angle 21 facing downwards when in use, and a virtually flat surface 20 on the upward facing side of the tubular body 11 a.

This arrangement improves the mechanical resistance of the handlebar to the stresses which it normally undergoes during normal operation of the motorcycle. Advantageously the right end segment 13, on which the acceleration control is mounted in motorcycle applications, is formed with a circular cross-section.

In the embodiment of Figures 1-5, the left end segment is also of circular cross-section.

The tubular body 11a is advantageously constructed of metal by hydroforming, and presents a cross-section which varies continuously along its length.

The cross-section varies both in size and in shape, enabling satisfactory mechanical resistance to be obtained, in particular against bending stresses, because of the presence of segments of polygonal cross-section. Moreover, the portions of circular cross-section avoid the need to mount additional components on the handlebar, such as cylindrical sleeves where the handlebar is clamped to the steering column or at the right accelerator control.

Figure 6 shows an alternative embodiment 31 of the handlebar of the present invention, in which the element corresponding to the embodiment of Figure 1 are indicated by those reference numerals plus 20.

The handlebar 31 differs from the handlebar 11 exclusively at the segment 39 interposed between the two circular cross-section portions 37, 38 intended to be clamped to the vehicle steering column. As shown in the figure, the segment 39 again presents a virtually triangular cross-section, but has a profile which is circumscribable about the circumference defined by the cross-sections of the tubular body at the portions 37 and 38.

Again in this case, those handlebar segments of polygonal cross-section present substantially triangular cross-section with an angle facing downwards and a virtually flat surface facing upwards. Figure 7 shows an alternative third embodiment 51 of the handlebar of the present invention, in which the element corresponding to the embodiment of Figure 1 are indicated by those reference numerals plus 40.

The handlebar 51 differs from the embodiment of Figures 1-5 only in that the left end segment 54 presents a generally triangular cross-section. This enables a corresponding left sleeve of the handlebar with a bore of triangular cross-section to be drawn directly over the tubular body, without the sleeve being able to roll on the handlebar.

Advantageously, the cross-section of the tubular body varies continuously along the longitudinal axis of the handlebar without there being any steps or localized variations in the shape or size of the tubular body.

Preferably the intermediate segments also present an angle of the triangle facing generally downwards when the handlebar is mounted on the vehicle steering column.

Those portions forming the bends present between the various segments) central, intermediate and end) also present a polygonal cross-section, advantageously triangular, with an angle facing generally downwards when in use.

At this point it is apparent that the objects of the present invention have been attained.

In particular, a handlebar for two-wheel vehicles has been provided having high mechanical strength by virtue of the presence of portions of generally polygonal cross-section.

Moreover, because of the presence of the circular cross-section portions at the central segment, the handlebar can be adjustably clamped to the vehicle steering column without the need to use additional elements.

By making the left end of the handlebar tubular body with a polygonal cross-section, a sleeve with a corresponding bore can be drawn over the handlebar without it being able to roll on the tubular body.

The aforegoing description of an embodiment applying the innovative principles of the present invention is provided as a non-limiting example of these principles and must therefore not be considered as limiting the scope of the appended claims.

The handlebar of the invention could also be used for vehicle types other than a motorcycle, for 3 or 4 wheeled handlebar vehicles, personal watercraft, snowmobiles, etc.

## Claims

1. A vehicle handlebar comprising a tubular body of variable cross-section, the tubular body comprising a central segment (12) intended to be clamped to the vehicle steering column, a pair of end segments (13, 14) intended to form opposing portions for gripping by the vehicle user, and a pair of intermediate segments (15, 16), inclined to the central segment, each of which connects an end segment to the central segment on opposite sides, **characterised in that** the tubular body has a generally polygonal cross-section at the intermediate segments, in the central segment a pair of portions (17, 18) of substantially circular cross-section being present to engage the vehicle steering column via clamping means, a portion of generally polygonal cross-section (19) being interposed between said two portions of substantially circular cross-section.

2. A handlebar as claimed in claim 1, **characterised in that** the right end segment (13) is of circular cross-section.

3. A handlebar as claimed in claim 1, **characterised in that** the left end segment (14) is of circular cross-section.

4. A handlebar as claimed in claim 1, **characterised in that** the left end segment (14) is of generally polygonal cross-section.

5. A handlebar as claimed in claim 1, **characterised in that** the cross-sections of the generally polygonal tubular body are of virtually triangular shape.

6. A handlebar as claimed in claim 1, **characterised in that** the portion (19) interposed between the two circular portions of the central segment of the handlebar tubular body presents a generally triangular cross-section with an angle (21) facing downwards when in use.

7. A handlebar as claimed in claim 1, **characterised in that** the portion (19) interposed between the two substantially circular portions (17, 18) in the central segment of the handlebar tubular body presents a cross-section inscribable in the circle described by the circular cross-section of said circular portions.

8. A handlebar as claimed in claim 1, **characterised in that** the portion (19) interposed between the two substantially circular portions (37, 38) in the central segment of the handlebar tubular body presents a cross-section circumscribable in the circle described by the circular cross-section of said circular portions.

9. A handlebar as claimed in claim 1, **characterised in that** the bends which connect together the various parts of the handlebar are of polygonal, preferably triangular, cross-section.

10. A handlebar as claimed in claim 5, **characterised in that** each handlebar segment of triangular cross-section presents an angle facing downwards when in use.

11. A handlebar as claimed in claim 1, **characterised in that** the tubular body is constructed of metal by hydroforming.

## Patentansprüche

1. Eine Fahrzeuglenkstange enthaltend einen rohrförmigen Körper mit sich änderndem Querschnitt, wobei der rohrförmige Körper einen zentralen Abschnitt (12) aufweist, der vorgesehen ist, um an die Fahrzeuglenksäule geklammert zu werden, ein Paar von Endabschnitten (13, 14), die vorgesehen sind, um einander gegenüberliegende Teile zu bilden zum Ergreifen durch den Fahrzeugbenutzer, und ein Paar von Zwischenabschnitten (15, 16), die zum zentralen Abschnitt geneigt sind, und von denen jedes einen Endabschnitt mit dem zentralen Abschnitt auf entgegengesetzten Seiten verbindet,
**dadurch gekennzeichnet,**
**dass** der rohrförmige Körper einen im Wesentlichen polygonalen Querschnitt in den Zwischenabschnitten hat, sowie im zentralen Abschnitt ein Paar von Teilbereichen (17, 18) von im Wesentlichen kreisförmigem Querschnitt, die da sind, um mit der Fahrzeuglenksäule mittels Klammermitteln verbunden zu werden, und einen Teilbereich von im Wesentlichen polygonalem Querschnitt (19), der zwischen den genannten zwei Teilbereichen von im Wesentlichen kreisförmigem Querschnitt angeordnet ist.

2. Eine Lenkstange gemäß Anspruch 1,
**dadurch gekennzeichnet,**
**dass** der rechte Endabschnitt (13) einen kreisförmigen Querschnitt hat.

3. Eine Lenkstange gemäß Anspruch 1,
**dadurch gekennzeichnet,**
**dass** der linke Endabschnitt (14) einen kreisförmigen Querschnitt hat.

4. Eine Lenkstange gemäß Anspruch 1,
**dadurch gekennzeichnet,**
**dass** der linke Endabschnitt (14) einen im Wesentlichen polygonalen Querschnitt hat.

5. Eine Lenkstange gemäß Anspruch 1,
**dadurch gekennzeichnet,**
**dass** die Querschnitte des im Wesentlichen polygonalen rohrförmigen Körpers von nahezu dreieckiger Form sind.

6. Eine Lenkstange gemäß Anspruch 1,
**dadurch gekennzeichnet,**
**dass** der Abschnitt (19), der zwischen den zwei kreisförmigen Teilabschnitten des zentralen Abschnitts des Lenkstangen-Rohrkörpers angeordnet ist, einen im Wesentlichen dreieckigen Querschnitt aufweist mit einem Winkel (21), der im Gebrauch nach unten gerichtet ist.

7. Eine Lenkstange gemäß Anspruch 1,
**dadurch gekennzeichnet,**
**dass** der Teilbereich (19), der zwischen den zwei im Wesentlichen kreisförmigen Teilbereichen (17, 18) im zentralen Abschnitt des Lenkstangen-Rohrkörpers vorgesehen ist, einen Querschnitt aufweist, um den der Kreis, der durch den kreisförmigen Querschnitt der genannten kreisförmigen Teilbereiche beschrieben wird, einen Umkreis bildet.

8. Eine Lenkstange gemäß Anspruch 1,
**dadurch gekennzeichnet,**
**dass** der Teilbereich (19), der zwischen den zwei im Wesentlichen kreisförmigen Teilbereichen (37, 38) im zentralen Abschnitt des Lenkstangen-Rohrkörpers angeordnet ist, einen Querschnitt aufweist, in dem der Kreis, der durch den kreisförmigen Querschnitt der genannten kreisförmigen Abschnitte beschrieben wird, einen Inkreis bildet.

9. Eine Lenkstange gemäß Anspruch 1,
**dadurch gekennzeichnet,**
**dass** die Bögen, die die verschiedenen Teile der Lenkstange miteinander verbinden, von polygonalem, vorzugsweise dreieckigem Querschnitt sind.

10. Eine Lenkstange gemäß Anspruch 5,
**dadurch gekennzeichnet,**
**dass** jede der Lenkstangen-Abschnitte mit dreieckigem Querschnitt einen Winkel aufweist, der im Gebrauch nach unten gerichtet ist.

11. Eine Lenkstange gemäß Anspruch 1,
**dadurch gekennzeichnet,**
**dass** der rohrförmige Körper durch Hydroformen aus Metall hergestellt ist.

## Revendications

1. Guidon de véhicule comprenant un corps tubulaire de section transversale variable, le corps tubulaire comprenant un segment central (12) prévu pour être bloqué sur la colonne de direction du véhicule, une paire de segments d'extrémité (13, 14) prévus pour former des parties opposées destinées à être saisies par l'utilisateur du véhicule, et une paire de segments intermédiaires (15, 16), inclinés vers le segment central, dont chacun raccorde un segment d'extrémité au segment central sur des côtés opposés, **caractérisé en ce que** le corps tubulaire a une section transversale généralement polygonale au niveau des segments intermédiaires, et **en ce que** dans le segment central, on trouve une paire de parties (17, 18) de section transversale sensiblement circulaire pour mettre en prise la colonne de direction du véhicule via des moyens de serrage, une partie de la section transversale généralement polygonale (19) étant intercalée entre lesdites deux parties de la section transversale sensiblement circulaire.

2. Guidon selon la revendication 1, **caractérisé en ce que** le segment d'extrémité droit (13) a une section transversale circulaire.

3. Guidon selon la revendication 1, **caractérisé en ce que** le segment d'extrémité gauche (14) a une section transversale circulaire.

4. Guidon selon la revendication 1, **caractérisé en ce que** le segment d'extrémité gauche (14) a une section transversale généralement polygonale.

5. Guidon selon la revendication 1, **caractérisé en ce que** les sections transversales du corps tubulaire généralement polygonal ont une forme sensiblement triangulaire.

6. Guidon selon la revendication 1, **caractérisé en ce que** la partie (19) intercalée entre les deux parties circulaires du segment central du corps tubulaire de guidon présente une section transversale généralement triangulaire avec un angle (21) orienté vers le bas lors de l'utilisation.

7. Guidon selon la revendication 1, **caractérisé en ce que** la partie (19) intercalée entre les deux parties sensiblement circulaires (17, 18) dans le segment central du corps tubulaire de guidon présente une section transversale inscriptible dans le cercle décrit par la section transversale circulaire desdites parties circulaires.

8. Guidon selon la revendication 1, **caractérisé en ce que** la partie (19) intercalée entre les deux parties sensiblement circulaires (37, 38) dans le segment central du corps tubulaire de guidon présente une section transversale pouvant être délimitée dans le cercle décrit par la section transversale circulaire desdites parties circulaires.

9. Guidon selon la revendication 1, **caractérisé en ce que** les courbures qui raccordent ensemble les différentes parties du guidon ont une section transversale polygonale de préférence triangulaire.

10. Guidon selon la revendication 5, **caractérisé en ce que** chaque segment de guidon de section transversale triangulaire présente un angle orienté vers le bas lors de l'utilisation.

11. Guidon selon la revendication 1, **caractérisé en ce que** le corps tubulaire est construit à partir de métal par hydroformage.
